# DEMANDE DE BREVET EUROPEEN

(11) **EP 0 819 711 A1**
(43) Date de publication de la demande: **21.01.1998**
(21) Numéro de dépôt: 97401672.7
(22) Date de dépôt: 11.07.1997
(51) Int. Cl.: C08G 18/40, C08G 18/62, C08G 18/12, C09J 175/04

(54) **Adhésifs monocomposants à base de polyuréthane à cohésion initiale améliorée**

(30) Priorité: 16.07.1996 FR 9608876
(71) Demandeur: Ato Findley S.A., 92800 Puteaux (FR)
(72) Inventeur: Bouttefort, Patrick, 60280 Margny les Compiegne (FR); Miskovic, Michel, 60200 Compiegne (FR); Guilpain, Gérard, 92500 Rueil Malmaison (FR)
(74) Mandataire: Haicour, Philippe

(57) **Abrégé**

L'invention a pour objet des adhésifs à base de polyuréthane résultant de la polyaddition d'un polyisocyanate, d'un polyol et d'un copolymère de l'éthylène, de l'acétate de vinyle et d'un monomère éthyléniquement insaturé comportant au moins un groupe hydroxyle primaire par mole.

Elle concerne également un procédé de préparation desdits adhésifs.

Elle concerne aussi l'utilisation des adhésifs pour le collage de matériaux souples tels que des films.

## Description

La présente invention a pour objet des adhésifs monocomposants réactifs à base de polyuréthane à vitesse de montée en cohésion initiale améliorée.

Dans le domaine des adhésifs, on utilise souvent des formulations mono-composantes réactives à base de polyuréthane du fait de leurs propriétés avantageuses suivantes :
- une bonne résistance mécanique de l'assemblage collé,
- une adhésion sur des supports de nature variée,
- une résistance à l'hydrolyse améliorée par rapport aux adhésifs traditionnels, notamment thermofusibles,
- une compatibilité avec des traitements postérieurs à l'opération de collage (par exemple la peinture),
- une bonne résistance chimique,
- et une bonne tenue thermique.

Ces propriétés résultent de la présence de groupes isocyanates libres dans le polyuréthane qui, après mise en oeuvre, réagissent avec l'humidité et/ou les fonctions réactives des supports à assembler provoquant une réticulation partielle subséquente.

Les formulations à base de polyuréthanes qui viennent d'être citées présentent cependant comme inconvénient majeur une vitesse de montée en cohésion faible. Il en résulte qu'il est nécessaire de maintenir les éléments collés pendant un temps suffisant pour que l'assemblage puisse être manipulé, ce qui s'avère rédhibitoire lorsqu'on souhaite réaliser des collages avec des machines fonctionnant à une cadence élevée.

Afin d'améliorer la montée en cohésion immédiatement après l'application, diverses solutions ont été proposées.

Ainsi, dans EP-A-107 097 on a proposé d'ajouter un polyuréthane ou un polyester cristallin thermoplastique dans des compositions thermofusibles à base d'un prépolymère isocyanate et d'une résine synthétique à bas poids moléculaire.

On a aussi décrit des adhésifs thermofusibles comprenant un prépolymère uréthane et des polymères à bas poids moléculaire (voir EP-A-246 473) ou un polymère thermoplastique d'éthylène et d'un monomère vinylique et un agent tackifiant (voir EP-A-289 945).

Dans EP-A-402 854, on forme une composition thermofusible en faisant réagir un polyisocyanate et un copolymère d'éthylène, d'acétate de vinyle et de monomères éthyléniquement insaturés comportant des fonctions hydroxyles.

Outre la faible vitesse de montée en cohésion, les adhésifs qui viennent d'être cités présentent l'inconvénient de n'être applicables qu'à une température élevée (cas de polyesters cristallins) ou de présenter une plastification de l'adhésif après réticulation (cas des polymères thermoplastiques).

Il a maintenant été trouvé de nouveaux adhésifs à base de polyuréthane qui permettent de remédier à ces inconvénients, plus particulièrement en terme de cohésion. Les adhésifs selon l'invention contiennent un polymère thermoplastique comportant des groupes hydroxyles liés chimiquement aux groupes isocyanates. Ainsi, ledit polymère fait partie intégrante de la structure du polyuréthane, ce qui n'est pas le cas dans les compositions de l'art antérieur qui sont obtenues par simple mélange de polyuréthane et de polymère thermoplastique.

Plus précisément, les adhésifs selon l'invention sont caractérisés en ce qu'ils sont composés du produit de polyaddition d'un polyisocyanate, d'un polyol et d'un copolymère de l'éthylène, de l'acétate de vinyle et d'un monomère éthyléniquement insaturé comportant au moins un groupe hydroxyle primaire par mole.

Le polyisocyanate constituant le polyuréthane selon l'invention est généralement choisi parmi les polyisocyanates aliphatiques, cycloaliphatiques ou aromatiques bien connus de l'homme du métier, ainsi que les mélanges de ces composés.

A titre d'exemples de polyisocyanates aliphatiques, on peut citer l'hexaméthylène diisocyanate (HMDI), l'éthylène diisocyanate, l'éthylidène diisocyanate, le propylène diisocyanate, le butylène diisocyanate, le dichlorohexaméthylène diisocyanate, le furfurylidène diisocyanate et les mélanges de ces composés.

A titre d'exemples de polyisocyanates cycloaliphatiques, on peut citer l'isophorone diisocyanate (IPDI), le cyclopentylène-1,3-diisocyanate, le cyclohexylène-1,4-diisocyanate, le cyclohexylène-1,2-diisocyanate et les mélanges de ces composés.

A titre d'exemples de polyisocyanates aromatiques, on peut citer le diphénylméthane diisocyanate, notamment le 4,4'-diphénylméthane diisocyanate (MDI), le 2,4'-diphénylméthane diisocyanate et le 2,2'-diphénylméthane diisocyanate, le toluène diisocyanate, notamment le 2,4-toluène diisocyanate (TDI) et le 2,6-toluène diisocyanate, le 2,2-diphénylpropane-4,4'-diisocyanate, le p-phénylène diisocyanate, le m-phénylène diisocyanate, le xylène diisocyanate, le 1,4-naphtalène diisocyanate, le 1,5-naphtylène diisocyanate, l'azobenzène-4,4'-diisocyanate, le diphényl sulfone-4,4'-diisocyanate, le 1-chlorobenzène-2,4-diisocyanate, le 4,4',4"-triisocyanatotriphényl méthane, le 1,3,5-triisocyanatobenzène, le 2,4,6-triisocyanatotoluène, le 4,4'-diméthyl diphénylméthane-2,2',5,5'-tétraisocyanate et les mélanges de ces composés.

De préférence, on utilise les diisocyanates et plus particulièrement le MDI, le 2,4'-diphénylméthane diisocyanate, le 2,2'-diphénylméthane diisocyanate, le TDI, le 2,6-toluène diisocyanate, le HMDI et l'IPDI.

On peut également utiliser les polyisocyanates précités en mélange avec un ou plusieurs monoisocyanates. Ceci permet notamment de contrôler le taux de greffage sur le copolymère ou d'introduire des groupes fonctionnels.

On préfère le paratoluènesulfonyl isocyanate ou un monoisocyanate comportant un ou plusieurs groupes silanes.

Le monoisocyanate représente généralement 0 à 10% en poids de l'ensemble des constituants de l'adhésif.

Le polyol constituant le polyuréthane selon l'invention est généralement choisi parmi les polyéthers polyols, les polyesters polyols et les polyols insaturés.

Les polyéthers polyols sont généralement choisis parmi les polyéthers polyols aliphatiques et aromatiques, et les mélanges de ces composés. De préférence, leur masse moléculaire moyenne est comprise entre 200 et 9000 et leur fonctionnalité hydroxyle est comprise entre 2 et 4,6.

A titre d'exemples de polyéthers polyols aliphatiques, on peut citer les dérivés oxyalkylés de diols tels que les polypropylène-glycols, ou de triols tels que le glycérol, le triméthylolpropane et l'hexane-1,2,6-triol, les polymères d'oxyde d'éthylène, de propylène ou de butylène, les copolymères d'oxyde d'éthylène et d'oxyde de propylène, les composés précités à terminaison silanyle et les dérivés oxyalkylés de diphényles tels que les dérivés oxyéthylénés ou oxypropylénés en position 4,4' du diphénylméthane.

De préférence, on utilise les dérivés oxypropylés du glycérol, les polymères d'oxyde de propylène ou de butylène et les copolymères d'oxyde d'éthylène et d'oxyde de propylène.

Les polyesters polyols sont généralement choisis parmi les polyesters polyols aliphatiques et aromatiques, et les mélanges de ces composées. De préférence, leur masse moléculaire moyenne est comprise entre 250 et 7000 et leur fonctionnalité hydroxyle est comprise entre 2 et 3.

A titre d'exemples, on peut citer les polyesters polyols résultant de la condensation de polyols aliphatiques, cycliques ou aromatiques tels que l'éthylène glycol, le propylène glycol, le glycérol, le triméthylolpropane, l'hexane-1,6-diol, l'hexane-1,2,6-triol, le butène diol, le sucrose, le glucose, le sorbitol, le pentaérythritol, le mannitol, la triéthanolamine et la n-méthyldiméthanolamine avec un acide tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique, un anhydride insaturé tel que l'anhydride maléique ou phtalique, ou une lactone telle que la caprolactone.

De préférence, on utilise les polyesters polyols résultant de la condensation de l'éthylène glycol, de l'hexane-1,6-diol ou du triméthylolpropane avec l'acide adipique ou phtalique et, de manière avantageuse, en mélange avec un polyester polyol à base de caprolactone.

Les polyols insaturés sont généralement choisis parmi les polyols et les mélanges de polyols ayant de préférence une masse moléculaire comprise entre 1200 et 3000.

A titre d'exemples, on peut citer le polybutadiène et le polyisoprène à terminaisons hydroxylées.

Les polyols précités peuvent également être utilisés en mélange avec d'autres composés hydroxylés.

On peut ainsi utiliser un monol ou un mélange de monols, en particulier les poly(éthylène/butylène)monols tels que le KRATON LIQUID^{TM} L-1203 Polymer commercialisé par Shell, ou un polyol ou un mélange de polyols choisis parmi les poly(éthylène/butylène)diols tels que le KRATON LIQUID^{TM} Polymer HPVM-2203 commercialisé par Shell, les résines indène/coumarone modifiées par du phénol, par exemple NOVARES CA120 commercialisée par VFT, et les résines tackifiantes hydroxylées, par exemple REAGEM commercialisée par DRT.

Le monol et le polyol précités représentent respectivement 0 à 10 % et 0 à 25 % en poids de l'adhésif.

Le copolymère constituant le polyuréthane selon l'invention est choisi parmi les copolymères de l'éthylène, de l'acétate de vinyle et d'un monomère éthyléniquement insaturé comportant au moins un groupe hydroxyle primaire ayant un indice de fluidité à 190°C compris entre 100 et 1000.

De préférence, ledit copolymère comprend :
1) 5 à 100 méq OH d'un monomère éthyléniquement insaturé comportant au moins un groupe hydroxyle par mole,
2) 60 à 90 % en poids d'éthylène,
3) 10 à 40 % en poids d'acétate de vinyle,
le pourcentage étant calculé par rapport au poids total de l'éthylène et de l'acétate de vinyle.

De manière avantageuse, ledit copolymère comprend :
1) 10 à 50 méq OH d'un monomère éthyléniquement insaturé comportant au moins un groupe hydroxyle par mole,
2) 65 à 80 % en poids d'éthylène,
3) 20 à 35 % en poids d'acétate de vinyle,
le pourcentage étant calculé par rapport au poids total de l'éthylène et de l'acétate de vinyle.

Avantageusement, ledit polymère a un indice de fluidité à 190°C compris entre 400 et 800.

Le monomère hydroxylé copolymérisé avec l'éthylène et l'acétate de vinyle a avantageusement pour formule : 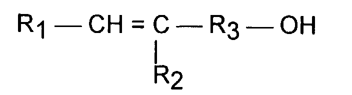 dans laquelle :
R₁ représente H ou un radical hydrocarboné en C₁-C₈,
R₂ représente H ou un radical hydrocarboné en C₁-C₄,
R₃ représente CO-O-(CH₂)ₓ, x étant compris entre 1 et 5, ou (CH₂)ₙ, n étant compris entre 0 et 10 inclus

A titre d'exemple de ces monomères, on peut citer l'alcool allylique, l'alcool oléylique, l'alcool vinylique, le méthacrylate de 2-hydroxyéthyle et l'acrylate de 2-hydroxyéthyle. De préférence, on utilise le méthacrylate ou l'acrylate de 2-hydroxyéthyle.

Le terme "méq OH" signifie "milli-équivalent d'OH", c'est-à-dire le nombre de millimole de fonction hydroxyle (OH) pour 100 g de copolymère.

La préparation du polyuréthane selon l'invention est réalisée par polyaddition du polyisocyanate, du polyol et du copolymère.

La polyaddition peut être réalisée selon trois variantes.

Dans une première variante préférée, on met en oeuvre un procédé en deux étapes qui consiste à faire réagir le polyisocyanate avec le polyol pour former un prépolymère, lequel prépolymère réagit ensuite, dans une deuxième étape, avec le copolymère pour former le polyuréthane selon l'invention.

Dans une deuxième variante, on fait réagir le polyisocyanate et le polyol pour former un prépolymère, lequel réagit ensuite dans un deuxième temps avec un mélange du copolymère et d'un polyol pour former le polyuréthane selon l'invention.

Dans une troisième variante, on prépare le polyuréthane selon un procédé en une seule étape qui consiste à faire réagir le polyisocyanate, le polyol et le copolymère, ces deux derniers constituants pouvant être mis en oeuvre simultanément ou successivement.

Pour la préparation du polyuréthane, la teneur en copolymère est généralement comprise entre 1 et 49 %, de préférence 5 et 30 %, en poids par rapport à l'ensemble des constituants, et ce, quelle que soit la variante utilisée.

La charge de polyol et de copolymère utilisée est généralement calculée de telle manière qu'après la polyaddition selon l'une quelconque des variantes précitées, il reste encore environ 1 à 25 %, de préférence 2 à 10 %, en poids de fonctions isocyanates libres dans le polyuréthane de l'invention.

La polyaddition peut, le cas échéant, être mise en oeuvre en présence de catalyseurs bien connus de l'homme du métier.

Les adhésifs polyuréthane selon l'invention peuvent contenir, en outre :
- jusqu'à 50 % en poids de composés contenant un ou plusieurs groupes isocyanates tels que des monoisocyanates, en particulier le paratoluènesulfonyl isocyanate ou un monoisocyanate comportant un ou plusieurs groupes silanes, ou des prépolymères à terminaisons isocyanates pouvant contenir un copolymère de l'éthylène, de l'acétate de vinyle et d'un monomère éthyléniquement insaturé contenant au moins un groupe hydroxyle,
- des catalyseurs de réticulation tels que des dérivés stanneux ou stanniques, par exemple le dibutyldilaurate d'étain, des trialkylamines, des amines hétérocycliques, par exemple le 2,2'-dimorpholinoéthyl éther (DMDEE), le 1,8-diazabicyclo[5.4.0]undecène-7 (DBU), la 1,4-diméthylpipérazine ou la triéthylènediamine, et les amines aliphatiques,
- des stabilisants tels que des anti-oxydants ou des anti-UV,
- des cires,
- des résines tackifiantes telles que la colophane,
- des polymères thermoplastiques tels que des copolymères éthylène/acétate de vinyle, des polymères acryliques ou polymères à base de polycaprolactone,
- des charges, par exemple des billes de verre.

Les polyuréthanes selon l'invention sont caractérisés par une vitesse de montée en cohésion initiale améliorée, une excellente résistance à la température après post-réticulation spontanée par action de l'humidité ambiante sur les NCO libres et une souplesse du collage particulièrement avantageuse, notamment pour le collage de matériaux souples ou rigides tels que les emballages flexibles, notamment à base de films plastiques ou textiles, les éponges, les panneaux, notamment pour le bâtiment, les carrosseries isothermes et les articles électroménagers.

Du fait des avantages précités, les adhésifs selon l'invention sont particulièrement adaptés aux collages réalisés sur des machines fonctionnant à une cadence élevée, par exemple pour le collage de matériaux sous forme de film.

Les exemples qui suivent permettent d'illustrer l'invention.

Dans ces exemples, on fait référence à des mesures d'indice de fluidité et de teneur en isocyanate.

L'indice de fluidité est mesuré à 190°C, sous 2,16 kg, selon la norme ASTM D 1238-70 et exprimé en g/10 minutes.

La teneur en isocyanate libre est mesurée selon la norme AFNOR T 52132, et exprimée en grammes de NCO pour 100 grammes d'adhésif.

### EXEMPLE 1 (Comparatif)

Dans un réacteur maintenu sous atmosphère d'azote, on introduit 38 parties en poids de 4,4'-diphénylméthane diisocyanate (MDI), 2 parties en poids de polyéther triol du type glycérine polypropylée (masse moléculaire = 450; fonctionnalité = 3 ; VORANOL CP 455 commercialisé par DOW CHEMICALS) et 7 parties en poids de polyéther diol du type oxyde de propylène (masse moléculaire = 400 ; fonctionnalité = 2 ; VORANOL P 400 commercialisé par DOW CHEMICALS).

On élève la température dans le réacteur à 60-65°C, et après achèvement de la réaction (taux de NCO stable), on introduit 24 parties en poids de polyéther diol du type copolymère éthylène-propylène (masse moléculaire = 3800 ; fonctionnalité = 2 ; VORANOL EP 1900 commercialisé par DOW CHEMICALS) et 29 parties en poids de polyéther diol du type polymère d'oxyde de propylène (masse moléculaire=400; fonctionnalité=2; VORANOL P400 commercialisé par DOW CHEMICALS).

On arrête la réaction lorsque la teneur en isocyanate libre du prépolymère est égale à 4,5 %.

Le prépolymère obtenu est solide à une température de l'ordre de 25°C, translucide et légèrement jaune. Lorsqu'il est fondu à 100°C, ce prépolymère présente, en outre, un fort pouvoir collant et une viscosité Brookfield égale à 2600 mPa.s.

### EXEMPLE 2

On mélange à 100°C, 83 parties en poids du prépolymère selon l'exemple 1 et 17 parties en poids d'un terpolymère éthylène/acétate de vinyle/hydroxyacrylate (65,7 % d'éthylène, 32 % d'acétate de vinyle, 2,3 % d'hydroxyéthylacrylate ; indice de fluidité = 460).

Le prépolymère isocyanate obtenu a les propriétés suivantes :

| | |
|---|---|
| Teneur en NCO | 3,7 % |
| Viscosité à 100°C | 10000 mPa.s |

### EXEMPLE 3

On procède dans les conditions de l'exemple 2 modifié en ce que l'on utilise 75 parties en poids du prépolymère et 25 parties en poids du terpolymère.

Le prépolymère isocyanate obtenu a les propriétés suivantes :

| | |
|---|---|
| Teneur en NCO | 3,2 % |
| Viscosité à 100°C | 17000 mPa.s |

### EXEMPLE 4

On procède dans les conditions de l'exemple 2 modifié en ce que l'on utilise 68 parties en poids du prépolymère et 32 parties en poids du terpolymère.

Le prépolymère isocyanate obtenu a les propriétés suivantes :

| | |
|---|---|
| Teneur en NCO | 2,8 % |
| Viscosité à 100°C | 55000 mPa.s |

### EXEMPLE 5

On procède dans les conditions de l'exemple 2 modifié en ce que l'on utilise 60 parties en poids du prépolymère et 40 parties en poids du terpolymère.

Le prépolymère isocyanate obtenu a les propriétés suivantes :

| | |
|---|---|
| Teneur en NCO | 2,4 % |
| Viscosité à 100°C | 260000 mPa.s |

### EXEMPLE 6

Dans un réacteur maintenu sous atmosphère d'azote, on introduit 28,5 parties en poids de MDI, 1,5 partie en poids de polyéther triol du type glycérine polypropylée (masse moléculaire =450; fonctionnalité = 3; VORANOL CP455 commercialisé par DOW CHEMICALS) et 5,25 parties en poids de polyéther diol du type oxyde de propylène (masse moléculaire = 400 ; fonctionnalité = 2; VORANOL P400 commercialisé par DOW CHEMICALS).

On élève la température dans le réacteur à 60-65°C et, après achèvement de la réaction (teneur en NCO de l'ordre de 25 %), on introduit 25 parties en poids de terpolymère éthylène/acétate de vinyle/hydroxyacrylate (65,7 % d'éthylène, 32 % d'acétate de vinyle, 2,3 % d'hydroxyéthylacrylate ; indice de fluidité = 460), 18 parties en poids de polyéther diol du type copolymère éthylène-propylène (masse moléculaire = 3800; fonctionnalité = 2; VORANOL EP1900 commercialisé par DOW CHEMICALS) et 21,75 parties en poids de polyéther diol du type polymère d'oxyde de propylène (masse moléculaire=400; fonctionnalité = 2; VORANOL P400 commercialisé par DOW CHEMICALS).

On arrête la réaction lorsque la teneur en isocyanate libre du prépolymère est stable.

Le prépolymère isocyanate obtenu a les propriétés suivantes :

| | |
|---|---|
| Teneur en NCO | 3,0 % |
| Viscosité à 100°C | 32000 mPa.s |

### EXEMPLE 7 (Comparatif)

On mélange à 100°C, 83 parties en poids du prépolymère préparé selon l'exemple 1 et 17 parties en poids d'une résine cétonique (AP commercialisée par HÜLS).

Le prépolymère obtenu a les propriétés suivantes :

| | |
|---|---|
| Teneur en NCO | 3,5 % |
| Viscosité à 100°C | 6000 mPa.s |

### EXEMPLE 8 (Comparatif)

Préparation d'un adhésif thermofusible polyuréthane selon l'art antérieur (exemple 1 de EP-B-369 607 - BOSTIK GmbH).

### Polymère A1

Dans un réacteur à 60°C sous atmosphère d'azote, on introduit 800 parties en poids de polyoxypropylène (masse moléculaire = 4000) et 4,5 parties en poids de toluolsulfonyl isocyanate. On introduit ensuite 107 parties en poids de MDI et on porte la masse à 110°C pendant 2 heures.

Le prépolymère A1 présente une viscosité à 130°C égale à 420 mPa.s et une teneur en NCO égale à 1,9 %.

### Polymère B

Dans un réacteur à 40°C sous atmosphère d'azote contenant 351,3 parties en poids de MDI, on introduit 4,3 parties en poids de toluolsulfonyl isocyanate et 500 parties en poids de polyoxypropylène (masse moléculaire = 400) et on chauffe à environ 60°C pendant une heure et à 120°C pendant une heure.

Le prépolymère présente une viscosité à 130°C égale à 18000 mPa.s et une teneur en NCO égale à 2,25 %.

### Préparation de l'adhésif

On mélange à 120-125°C, une partie en poids du prépolymère A1 et 99 parties en poids du prépolymère B pendant une heure.

Le mélange obtenu est légèrement jaune, transparent et liquide à 130°C et présente une viscosité à 130°C égale à 18000 mPa.s et une teneur en NCO égale à 2,20 %.

### EXEMPLE 9 (Comparatif)

Dans un réacteur maintenu sous atmosphère d'azote, on introduit 225 parties en poids de MDI, puis à 80°C, 478 parties en poids de polyester polyol de structure aliphatique (masse moléculaire = 5500 ; fonctionnalité = 2), 708 parties en poids de polyester polyol de structure aliphatique (masse moléculaire = 3500 ; fonctionnalité = 2) et 47 parties en poids de polycaprolactone polyol (masse moléculaire = 540 ; fonctionnalité = 3).

La masse est portée à 90-95°C.

On arrête la réaction lorsque la teneur en isocyanate libre du prépolymère est égale à 2,7 %.

Le prépolymère obtenu est solide à la température ambiante et présente une coloration jaune/blanc. A 130°C, ce prépolymère est liquide et a une viscosité égale à 15000 mPa.s.

### EXEMPLE 10

On mélange à 100°C, 90 parties en poids du prépolymère selon l'exemple 9 et 10 parties en poids d'un terpolymère éthylène/acétate de vinyle/hydroxyacrylate (65,7 % d'éthylène, 32 % d'acétate de vinyle, 2,3 % d'hydroxyéthylacrylate ; indice de fluidité = 460).

Le prépolymère isocyanate obtenu a les propriétés suivantes :

| | |
|---|---|
| Teneur en NCO | 2,1 % |
| Viscosité à 130°C | 60000 mPa.s |

### EXEMPLE 11

Dans un réacteur à 90-95°C maintenu sous atmosphère d'azote, on introduit 230 parties en poids de MDI, 478 parties en poids de polyester polyol de structure aliphatique (masse moléculaire = 5500 ; fonctionnalité = 2), 637,2 parties en poids de polyester polyol de structure aliphatique (masse moléculaire = 3500 ; fonctionnalité = 2), 47 parties en poids de polycaprolactone polyol (masse moléculaire = 540 ; fonctionnalité = 3) et 194 parties en poids d'un terpolymère éthylène/acétate de vinyle/hydroxyacrylate (65,7 % d'éthylène, 32 % d'acétate de vinyle, 2,3 % d'hydroxyéthylacrylate ; indice de fluidité = 460).

Le prépolymère isocyanate obtenu a les propriétés suivantes :

| | |
|---|---|
| Teneur en NCO | 2,4 % |
| Viscosité à 130°C | 27000 mPa.s |

### EXEMPLE 12

On procède dans les conditions de l'exemple 11 modifié en ce que l'on utilise 531,2 parties en poids du polyester polyol de masse moléculaire 3500 et 487 parties en poids du terpolymère.

Le prépolymère isocyanate obtenu a les propriétés suivantes :

| | |
|---|---|
| Teneur en NCO | 2,0 % |
| Viscosité à 130°C | 110000 mPa.s |

### EXEMPLE 13 (Comparatif)

Préparation d'un adhésif thermofusible polyuréthane selon l'art antérieur (exemple 1 de EP-A-246 473 - National Starch and Chemical Corporation).

Dans un réacteur sous atmosphère d'azote, on introduit 275,8 parties en poids de polypropylène glycol (masse moléculaire 1000), 88,9 parties en poids de 1,6-hexane diol, néopentyl glycol adipate (masse moléculaire = 3000), 29,3 parties en poids de 1,6-hexane diol, néopentyl glycol adipate (masse moléculaire = 1000), 17,8 parties en poids de méthacrylate de butyle, 9,4 parties en poids de méthacrylate de méthyle, 0,68 parties en poids de dodécyl mercaptan et 1,7 parties en poids de peroxyde de benzoyle. On porte la masse à 80°C et après 30 minutes, on introduit en une heure 94,1 parties en poids de méthacrylate de butyle et 53,6 parties en poids de méthacrylate de méthyle. Après 3 heures à 80°C, on introduit 0,6 parties en poids de peroxyde de benzoyle. Après 2 heures à 80°C, on introduit 131,1 parties en poids de MDI. On porte le réacteur à 100°C pendant 3 heures et on applique un vide de 120-130 mm pendant 20-30 minutes.

Le produit obtenu a les propriétés suivantes :

| | |
|---|---|
| Teneur en NCO | 1,5 % |
| Viscosité à 130°C | 61000 mPa.s |

### EXEMPLE 14 (Comparatif)

Dans un réacteur sous atmosphère d'azote, on introduit 168 parties en poids de MDI, puis à 80°C, 600 parties en poids de polyester polyol de structure aromatique/aliphatique (masse moléculaire = 3500 ; fonctionnalité = 2), 200 parties en poids de polyester polyol de structure aliphatique (masse moléculaire = 3500 ; fonctionnalité = 2) et 16 parties en poids de polycaprolactone polyol aliphatique (masse moléculaire = 540 ; fonctionnalité = 3).

La masse est portée à 100-110°C. On arrête la réaction lorsque la teneur en isocyanate libre du prépolymère est égale à 3,4 %.

Le prépolymère obtenu est solide à la température ambiante, translucide et de couleur légèrement jaune. A 130°C, ce prépolymère est liquide et a une viscosité égale à 16000 mPa.s.

### EXEMPLE 15

On mélange à 100°C, 80 parties en poids du prépolymère selon l'exemple 14 et 20 parties en poids d'un terpolymère éthylène/acétate de vinyle/hydroxyacrylate (65,7 % d'éthylène, 32 % d'acétate de vinyle, 2,3 % d'hydroxyéthylacrylate ; indice de fluidité = 460).

Le prépolymère isocyanate obtenu a les propriétés suivantes :

| | |
|---|---|
| Teneur en NCO | 2,5 % |
| Viscosité à 130°C | 72000 mPa.s |

### EXEMPLES 16 à 30

Dans les exemples qui suivent, on mesure la cohésion initiale des adhésifs précités selon la méthode qui consiste à déposer, à 100 ou 130°C, un cordon d'adhésif thermofusible ayant un diamètre de l'ordre de 1,5 mm sur une éprouvette en carton non traité. On applique immédiatement une deuxième éprouvette identique à la première et on opère une pression manuelle sur le joint pendant 5 ou 15 secondes (temps de pression). Le joint collé ainsi réalisé est suspendu immédiatement en position verticale par son extrémité supérieure et on charge l'extrémité inférieure avec des masses de 150 ou 300 g. On mesure le temps nécessaire, en secondes (ci-après temps de résistance), pour que l'assemblage cède.

Les résultats sont présentés dans le tableau 1 suivant :

### EXEMPLE 31

Dans un réacteur maintenu sous atmosphère d'azote, on introduit 30 parties en poids de 4,4'-diphénylméthane diisocyanate (MDI), 5 parties en poids de polyéther triol du type glycérine polypropylée (masse moléculaire = 450 ; fonctionnalité = 3 ; VORANOL CP455 commercialisé par DOW CHEMICALS).

On élève la température dans le réacteur à 60-65°C et après achèvement de la réaction (taux de NCO stable), on introduit 65 parties en poids de polyéther diol du type copolymère éthylène-propylène (masse moléculaire = 3800 ; fonctionnalité = 2 ; VORANOL EP1900 commercialisé par DOW CHEMICALS).

La réaction est achevée lorsque le taux en isocyanate libre est égal à 7,4 %.

On chauffe le prépolymère ainsi obtenu à 90°C et on y introduit 5 parties en poids de terpolymère éthylène/acétate de vinyle/hydroxyéthylacrylate (65,7 % d'éthylène ; 32 % d'acétate de vinyle ; 2,3 % d'hydroxyéthylacrylate ; indice de fluidité = 460).

Le prépolymère isocyanate obtenu a les propriétés suivantes :
Teneur en NCO = 7 %
Viscosité à 23°C = 17000 mPa.s

Le prépolymère présente un fort pouvoir collant ainsi qu'une cohésion et une souplesse améliorées par rapport au même adhésif ne contenant pas le terpolymère.

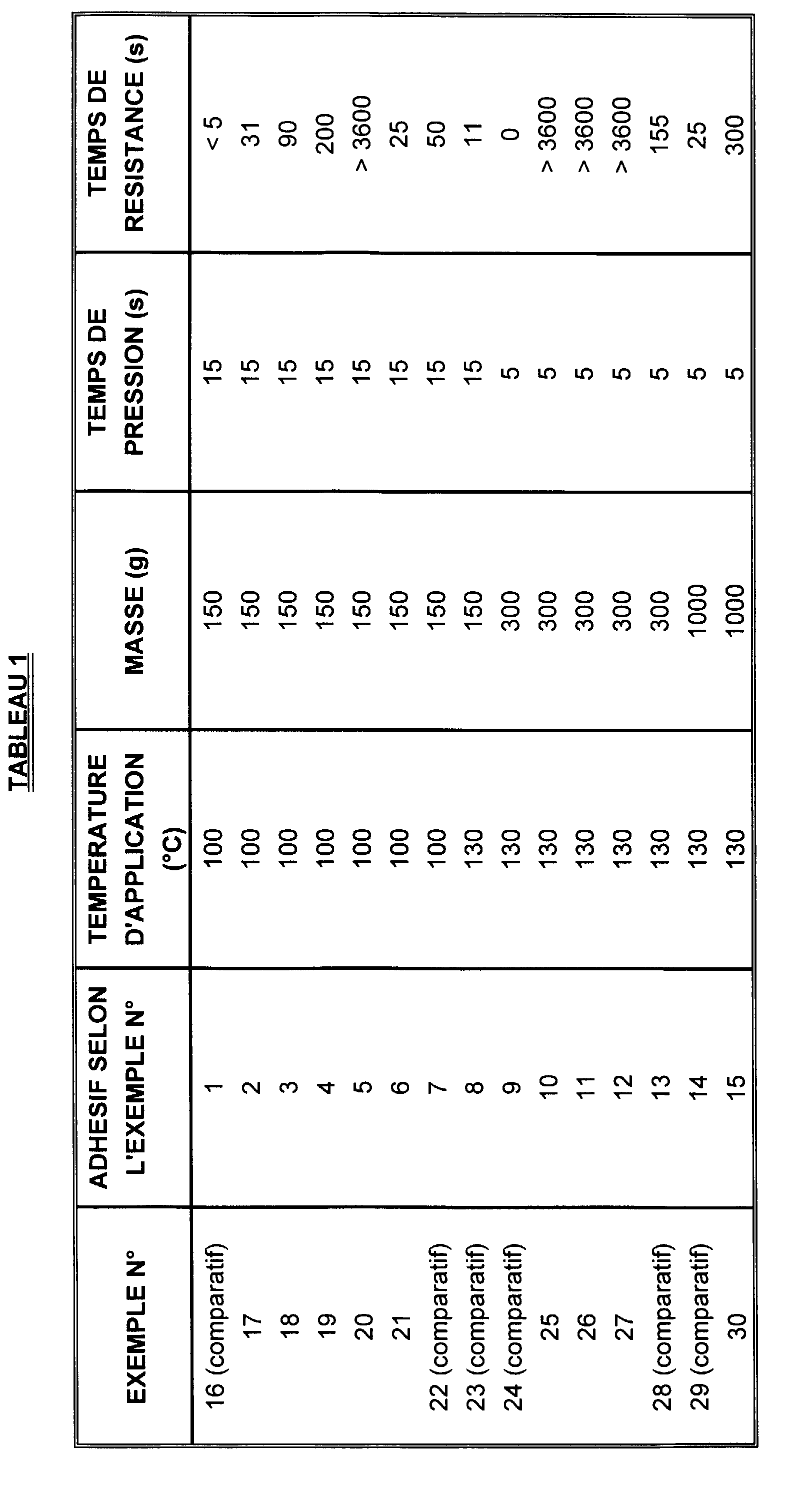

## Revendications

1. Adhésifs monocomposants à base de polyuréthane caractérisés en ce qu'ils résultent de la polyaddition d'un polyisocyanate, d'un polyol et d'un copolymère de l'éthylène, de l'acétate de vinyle et d'un monomère éthyléniquement insaturé comportant au moins un groupe hydroxyle primaire par mole.

2. Adhésifs selon la revendication 1, caractérisés en ce que le polyisocyanate est choisi parmi les polyisocyanates aliphatiques, cycloaliphatiques et aromatiques et les mélanges de ces composés.

3. Adhésifs selon la revendication 2, caractérisés en ce que le polyisocyanate est le MDI, le 2,4'-diphénylméthane diisocyanate, le 2,2'-diphénylméthane diisocyanate, le TDI, le 2,6-toluène diisocyanate, le HMDI ou l'IPDI.

4. Adhésifs selon la revendication 1, caractérisés en ce que le polyol est choisi parmi les polyéthers polyols, les polyesters polyols, les polyols insaturés et les mélanges de ces composés.

5. Adhésifs selon la revendication 1, caractérisés en ce que le copolymère comprend :
1) 5 à 100 méq OH d'un monomère éthyléniquement insaturé comportant au moins un groupe hydroxyle par mole,
2) 60 à 90 % en poids d'éthylène,
3) 10 à 40 % en poids d'acétate de vinyle,
le pourcentage étant calculé par rapport au poids total de l'éthylène et de l'acétate de vinyle.

6. Adhésifs selon la revendication 5, caractérisés en ce que le copolymère présente un indice de fluidité à 190°C compris entre 100 et 1000.

7. Adhésifs selon l'une des revendications 1, 5 ou 6, caractérisés en ce que la teneur en copolymère est comprise entre 1 et 49 % en poids.

8. Adhésifs selon la revendication 1, caractérisés en ce que la teneur en fonctions isocyanates libres est comprise entre 1 et 25 %.

9. Procédé de préparation des adhésifs selon les revendications 1 à 8, caractérisé en ce qu'il est mis en oeuvre par polyaddition d'un polyisocyanate, d'un polyol et d'un copolymère de l'éthylène, de l'acétate de vinyle et d'un monomère éthyléniquement insaturé comportant au moins un groupe hydroxyle par mole.

10. Procédé selon la revendication 9, caractérisé en ce qu'il consiste à faire réagir, dans un premier temps, le polyisocyanate et le polyol pour former un prépolymère, lequel prépolymère réagit, dans un deuxième temps, avec le copolymère.

11. Utilisation des adhésifs selon l'une des revendications 1 à 8 pour le collage de matériaux souples tels que des films ou rigides.
